# FASCICULE DE BREVET EUROPEEN

(11) **EP 1 886 870 B1**
(45) Date de publication et mention de la délivrance du brevet: **03.07.2013**
(21) Numéro de dépôt: 07112715.3
(22) Date de dépôt: 27.07.2007
(51) Int. Cl.: B60Q 1/04

(54) **Projecteur pour véhicule automobile**
Scheinwerfer für Kraftfahrzeug
Headlight for automobile

(30) Priorité: 31.07.2006 FR 0606985
(43) Date de publication de la demande: 13.02.2008
(73) Titulaire: VALEO VISION, 93012 Bobigny (FR)
(72) Inventeur: Nunez Bootello, Juan Pablo, 41007, Sevilla (ES); Castilllo Jimenez, Jose, 23600, Martos (ES); Camacho Donaire, Antonio, 23600, Martos (ES)
(74) Mandataire: Tran, Chi-Hai

(56) Documents cités:
- EP-A- 1 147 940
- EP-A- 1 645 799
- EP-A- 1 736 358
- EP-A1- 1 145 903
- EP-A1- 1 400 406
- DE-A1- 10 101 789
- DE-A1- 10 156 240
- FR-A1- 2 844 757

## Description

L'invention concerne un projecteur pour véhicule automobile. Elle s'intéresse plus particulièrement aux projecteurs adaptés pour atténuer au mieux le choc avec un piéton, qui viendrait heurter la face avant d'un véhicule roulant équipé de ces projecteurs. On sait en effet que les projecteurs, de par leur localisation, jouent un grand rôle dans la sécurité passive des véhicules : lors d'un accident, il est fréquent que le piéton heurte un projecteur, qui peut constituer, à l'avant du véhicule, un « point » dur par rapport à la carrosserie du véhicule dans laquelle il est intégré.

C'est une préoccupation croissante, et une récente réglementation Européenne a défini les différents critères que les projecteurs doivent respecter pour amortir les chocs vis-à-vis des piétons (Directive Européenne 2003-102 et Directive plus récente de 2004).

L'invention s'intéresse aussi à une problématique voisine : celle de la réparabilité du projecteur en cas de choc contre un élément de construction, un mur par exemple.

Beaucoup de solutions ont déjà été proposées pour parvenir à ce que le projecteur puisse absorber au moins en partie l'énergie dégagée lors du choc, afin d'en réduire les conséquences néfastes sur le piéton.

Ainsi, le brevet FR 2 844 757 décrit des moyens de liaison d'un projecteur au véhicule qui sont frangibles, et qui vont se rompre progressivement en cas de choc, absorbant par la même une partie de l'énergie dégagée lors du choc.

Le brevet FR 2 876 068 décrit un projecteur contenant un module optique de type elliptique conçu de façon à ce que l'énergie dégagée lors du choc soit absorbée au moins en partie en déplaçant au moins une partie du module.

Le brevet FR 2 870 922 décrit un projecteur dont le boîtier comprend localement une zone déformable de façon contrôlée, toujours de façon à amortir le choc par déformation d'un élément du projecteur cette fois.

Le brevet FR 2 844 866 décrit un projecteur dont la glace de fermeture est montée de façon à être déployable sous l'action d'un dispositif de sécurité, pour amortir le choc en accompagnant le mouvement relatif du piéton vers le projecteur.

Cependant, ces solutions sont perfectibles : elles ne s'adaptent pas toutes aux différentes formes de projecteurs et aux différentes façons de les monter dans les véhicules, elles peuvent aussi s'avérer complexes de mise en oeuvre dans certains cas.

L'invention a alors pour but la mise au point d'un nouveau type de projecteur selon la revendication 1 pour véhicule automobile, susceptible de mieux répondre aux critères de protection des piétons en cas de choc. Elle cherche notamment à ce que sa fabrication reste simple, à ce que l'on puisse adapter aisément la solution technique trouvée à des projecteurs de toutes formes, de toutes dimensions, à ce qu'il remplisse au moins tous les critères définis dans la réglementation européenne.

L'invention a tout d'abord pour objet un projecteur pour véhicule automobile, comportant :
- un boîtier,
- une glace de fermeture fermant le boîtier et présentant une face avant et une jupe périphérique,
- au moins un module optique comportant au moins un élément optique du type réflecteur et/ou lentille, et au moins une source lumineuse, le projecteur étant tel que la face avant de la glace est munie d'au moins une ligne d'amorce de rupture.

La glace est en effet le premier composant du projecteur avec lequel le piéton va entrer en contact en choc frontal, et c'est un composant dur mécaniquement, qui est le plus généralement en matériau plastique rigide, ou, parfois encore, en verre, donc à capacité de déformabilité très limitée. Créer une ligne d'amorce de rupture sur la face avant de la glace va permettre, en cas de choc, de faire céder la glace, de la briser de façon contrôlée au niveau de cette ligne d'affaiblissement mécanique, la rupture de la glace permettant d'absorber au moins une partie de l'énergie dégagée lors du choc.

De préférence, la ligne d'amorce de rupture se présente sous forme d'un amincissement local de la glace. Il s'agit par exemple d'une strie (en creux) au niveau de la surface interne de la face avant de la glace. « Interne » signifie la surface tournée vers l'intérieur du projecteur, par opposition à « Externe ».

Cette ligne de rupture peut être une ligne ouverte ou fermée. Quand elle a un contour fermé, la glace va casser selon ce contour, avec un mouvement de recul de la portion de glace délimitée par cette ligne fermée. Quand elle a un contour ouvert, elle peut avoir une forme de coin, d'échancrure conçue de telle sorte que la portion de glace au voisinage de cette ligne va se casser en se pliant, notamment approximativement selon un axe virtuel de pliage passant par les deux extrémités de la ligne ouverte ou à proximité de celles-ci.

Il peut s'agir d'une ligne brisée, d'une ligne à une ou plusieurs courbures. On peut aussi utiliser une ligne « en pointillés », avec des segments de ligne successifs dans le prolongement les uns des autres.

Une ligne d'amorce de rupture suivant l'invention est une ligne en forme d'un coin suivant de préférence au moins localement le contour de la face avant de la glace. Ce coin peut avoir la forme approximative d'un V ou d'un U.

Selon un mode de réalisation, la ligne d'amorce de rupture est une ligne qui traverse substantiellement la face avant de la glace. Dans ce cas, lors du choc, les deux portions de glace délimitées par cette ligne ont tendance à s'effondrer et/ou exploser le long de cette ligne.

La glace peut comporter une ou plusieurs de ces lignes d'amorce de rupture. On peut aussi prévoir des lignes de ruptures ramifiées.

La section de la ligne d'amorce de rupture peut être en forme de V ou de U, être plus ou moins évasée vers le haut.

Avantageusement, le rapport entre l'épaisseur réduite de la glace au niveau de ces lignes d'amorce de rupture et l'épaisseur nominale de la glace est d'au moins 0,50, notamment d'au moins 0,55 ou au moins 0,60, notamment d'environ 0,65.

Selon une variante, la ligne d'amorce de rupture est présente sur la face avant de la glace de façon à être aisément repérable. C'est notamment le cas quand elle traverse tout ou partie de la glace, ou quand elle suit le contour de la face avant de façon visible : elle participe alors aussi au style du projecteur.

Selon une autre variante, on cherche plutôt à dissimuler la présence de la ligne d'amorce de rupture. Dans ce cas, on peut disposer la ligne de façon à ce qu'elle suive le pourtour de la face avant de la glace à la limite de sa jupe périphérique, de telle sorte qu'elle soit quasiment ou totalement dissimulée une fois le projecteur monté dans la carrosserie du véhicule. Une autre solution consiste à la « noyer » dans un ensemble de stries à but décoratif ou optique. Ces stries sont fréquemment présentes sur les faces avant des glaces, se présentent sous forme de sillons en creux ou en bossage, mais avec une modification locale de l'épaisseur de la glace (que ce soit par amincissement ou épaississement) significativement inférieure à l'amincissement crée par la ligne de rupture. Insérer la ligne d'amorce de rupture parmi ce type de stries la rend moins visible, moins repérable.

On peut donc faire en sorte que la ligne d'amorce de rupture soit adjacente à une ou plusieurs stries décoratives ou à fonction optique, et qu'elle suive, au moins partiellement, la forme (longitudinale) de celles-ci.

Donc, on peut faire en sorte que les lignes d'amorces de rupture se localisent dans les endroits où les efforts se concentrent pendant l'impact, ce qui favorisera la rupture souhaitée, par exemple dans les raccordements entre la glace et la jupe périphérique.

Comme évoqué plus haut, dans cette configuration, la ou les stries décoratives ou à fonction optique adjacentes à la ligne d'amorce de rupture se présentent sous forme de sillons, lesdits sillons étant moins profonds que la ligne, notamment au moins deux fois moins profonds. Les sillons peuvent aussi se présenter sous forme de lignes de bossage.

Mais il peut s'avérer utile de prévoir également un ou plusieurs moyens complémentaires pour amortir le choc.

On peut ainsi prévoir en outre que l'assemblage des composants du module optique utilise des moyens de fixation frangibles.

On peut aussi prévoir que le module optique soit monté sur une platine à l'aide de moyens de fixation également frangibles.

Ces moyens de fixation frangibles peuvent se présenter sous forme de vis, de préférence en matériau plastique, et présentant une zone d'amorce à la rupture.

On peut aussi prévoir de modifier la platine elle-même, en la munissant, elle aussi, d'au moins une ligne d'amorce de rupture, notamment au moins deux, de préférence quatre. Il s'agit de lignes d'amincissement localisé de la platine.

Les buts de ces moyens de fixation aisément cassables ou de ces lignes d'amorce de rupture est le même : 1) contrôler la rupture dans des endroits précis, 2) absorber l'énergie de l'impact 3) contrôler la raideur 4) maintenir les niveaux d'efforts vues par l'impacteur (l'élément utilisé dans les tests pour simuler une tête ou une hanche d'une personne, selon les critères définis dans les directives européennes) au dessous des limites désirables et 5) contrôler la cinématique du module optique en le faisant « reculer » de façon contrôlé dans le projecteur, par translation ou par basculement du module entier ou de certains de ses composants. On peut ainsi faire en sorte que le composant constituant le point dur du module soit apte à basculer/à se détacher du module de façon contrôlé et prédictible. Dans le cas d'un module elliptique, comportant de façon connue un réflecteur elliptique, une source de lumière et une lentille, c'est la lentille, épaisse et le plus fréquemment en verre, qui constitue une des points durs du module, et il est avantageux que sa fixation au reste du module, notamment par une pièce intermédiaire, puisse céder en cas de choc, le cas échéant.

On peut aussi prévoir de munir le projecteur de moyens de fixation au véhicule sous forme de pattes de liaison frangibles également, de façon à ce que, finalement, le projecteur tout entier puisse également basculer /reculer d'une façon contrôlée.

L'invention a également pour objet un procédé selon la revendication 10 pour absorber au moins partiellement l'énergie générée lors d'un impact entre un obstacle et un projecteur de véhicule, ledit projecteur comportant :
- un boîtier,
- une glace de fermeture fermant le boîtier et présentant une face avant et une jupe périphérique,
- au moins un module optique comportant au moins un élément optique du type réflecteur et/ou lentille, et au moins une source lumineuse,

Le procédé comporte les étapes suivantes :
- absorption d'une partie de l'énergie par bris de la glace de fermeture le long d'au moins une ligne de rupture présente sur sa face avant, puis
- absorption d'une partie de l'énergie par bris des moyens d'assemblage frangibles des composants du module,
- et/ou absorption d'une partie de l'énergie par bris des moyens d'assemblage frangibles du module optique à sa platine,
- et/ou absorption d'une partie de l'énergie par bris des moyens de fixation frangibles du projecteur au véhicule.

L'invention a également pour objet tout véhicule automobile équipé de tels projecteurs.

L'invention sera décrite en détails à l'aide de modes de réalisations non limitatifs illustrés par les figures suivantes :
- Fig.1a,1b,1c : une vue de côté de l'avant d'un véhicule automobile, montrant l'implantation d'un projecteur, et trois types de choc qu'il peut subir,
- Fig.2 : une vue de la face interne de la glace de fermeture du projecteur selon la figure 1, représentant différents types de ligne d'amorce de rupture,
- Fig. 3a,3b : une vue en section transversale de deux variantes de lignes d'amorce de rupture de la glace selon la figure 2,
- Fig. 4a,4b : une vue en perspective et en section transversale d'une variante de ligne d'amorce de rupture parmi des stries décoratives d'une glace de fermeture de projecteur,
- Figure 5a,5b : une vue en face avant et en face arrière du module optique monté sur sa platine de fixation au projecteur,
- Fig. 6 : une vue éclatée de la fixation des composants du module optique,
- Fig.7 : une vue éclatée du montage du module optique sur sa platine,
- Fig.8 : une vue en section longitudinale d'une vis frangible utilisée pour monter le module optique.

Toutes ces figures sont schématiques, et ne respectent pas nécessairement l'échelle pour en faciliter la lecture.

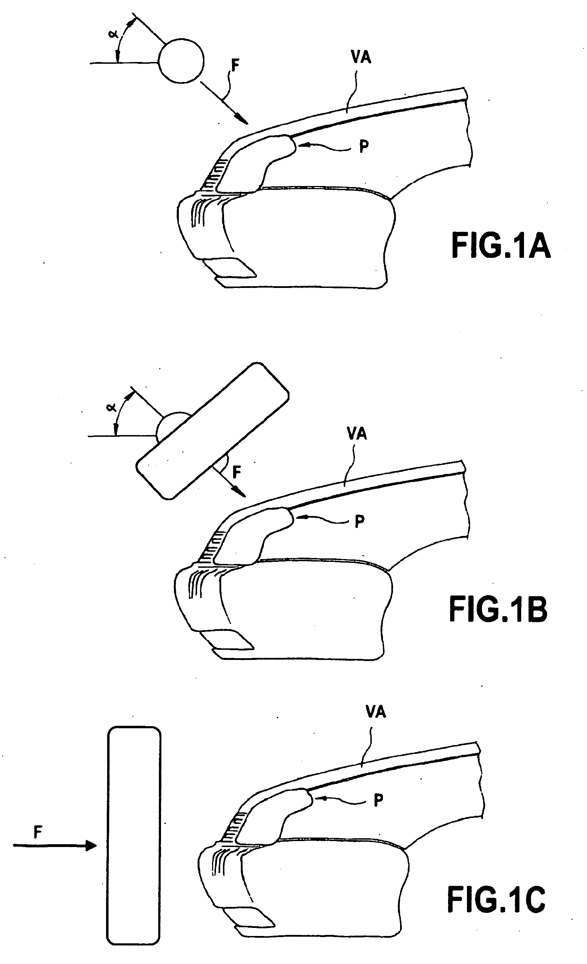

Sur les figures 1a,1b et 1c, on a représenté, selon une vue de côté, la partie avant d'un véhicule automobile VA pourvu d'un projecteur P. En cas de choc entre un piéton adulte ou enfant et le véhicule, la tête du piéton (Fig 1a), la jambe (Fig 1b) et la hanche (Fig 1c), peuvent heurter le projecteur et casser la glace de protection du projecteur. Le projecteur comporte aussi des éléments rigides qui forment, ensemble, un ensemble assez rigide en comparaison avec son environnement. La figure 1a symbolise par un cercle la tête d'un piéton heurtant avec une force F le projecteur P du véhicule, la figures 1b symbolise par un rectangle incliné la hanche d'un piéton heurtant avec une force F le projecteur du véhicule, et la figure 1c symbolise par un autre rectangle disposé verticalement la jambe d'un piéton ou un mur. On voit que le premier élément rencontré par le piéton ou le mur est la glace de fermeture G du projecteur P, puis, si la glace de protection G se casse, le ou les modules optiques derrière la glace, qui peuvent contenir des éléments rigides indéformables comme une lentille en verre.

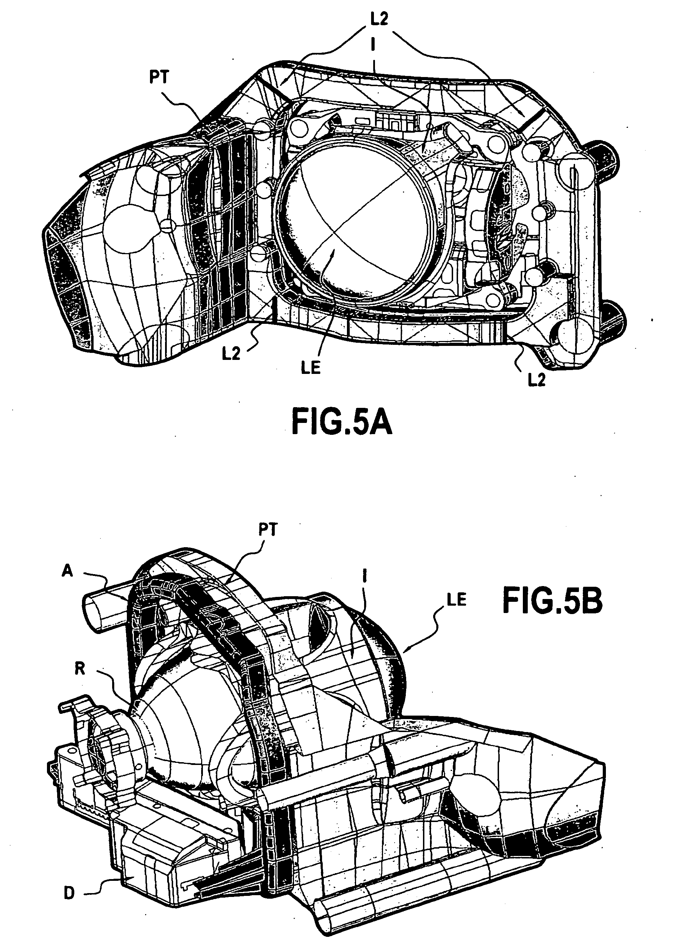

Les exemples décrivent tous, sans que l'invention s'y limite, des projecteurs à module optique de type elliptique, qui seront décrits par la suite à l'aide des figures 5 à 7.

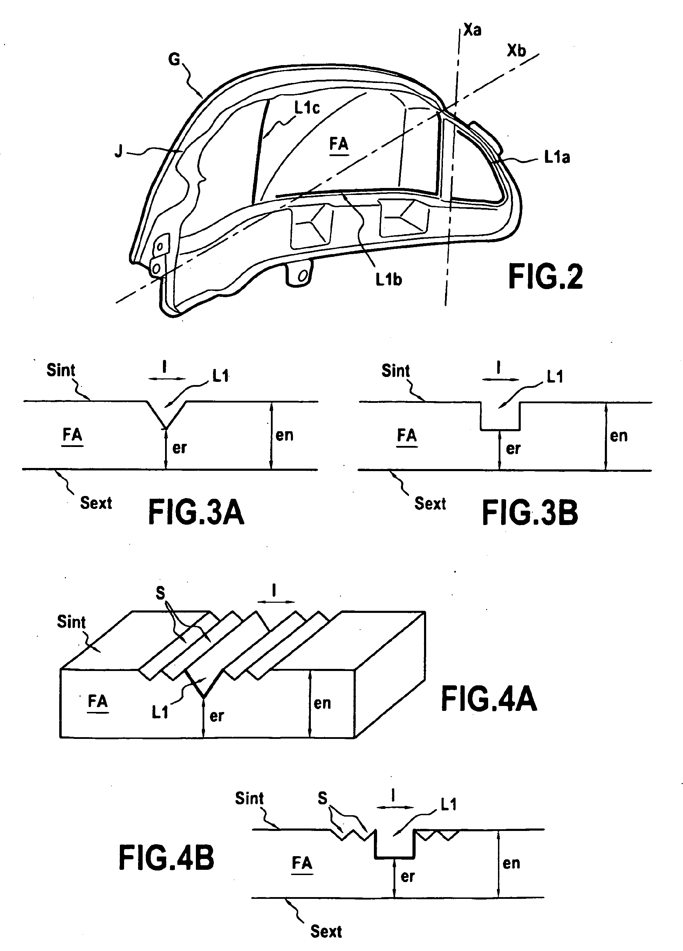

La figure 2 représente la face interne de la glace G du projecteur P. Elle comprend une face avant FA et une jupe périphérique J qui est la zone de jonction avec le boîtier du projecteur (non représenté). Elle représente aussi trois types de lignes d'amorce à la rupture L1a, L1b et L1c, de façon à mieux pouvoir les comparer sur une figure unique. Mais l'invention concerne des glaces de projecteurs contenant une ou deux de ces lignes seulement. Les lignes L1a, L1b et L1c sont des sillons, créant un amincissement local de la glace :
La ligne d'amorce de rupture L1a est disposée dans un des coins inférieurs de la face avant FA de la glace G (« inférieur », « supérieur », « haut », « bas » et autres termes similaires se rapportent à la position des éléments tels que représentés aux figures, et pas nécessairement selon la position qu'a exactement le projecteur P une fois monté sur le véhicule VA.) Elle suit le pourtour de la face avant, à proximité de la jupe J, de façon à ce que, une fois le projecteur P monté dans le véhicule VA, cette ligne L1a soit quasiment ou entièrement dissimulée. Cette ligne est, grossièrement, en forme d'un V délimitant une portion de glace sous forme d'une aile. En cas de choc, cette aile tend à se replier vers l'intérieur du projecteur, autour d'un axe fictif Xa qui passe par les deux extrémités de la ligne L1a.
La ligne d'amorce de rupture L1b est également en forme de V, cette fois avec une ouverture plus grande que L1a. En cas de choc, la portion de glace délimitée par L1b tendra à se replier selon un axe fictif Xb, comme L1a. Par contre, L1b est bien visible une fois le projecteur monté sur le véhicule, et elle participe au style du projecteur, notamment en soulignant un galbe, un relief particulier de la glace G.
La ligne d'amorce de rupture L1c est une ligne qui traverse la glace G sur toute la largeur de sa face avant FA. En cas de choc, les deux zones de la glace partagées par cette ligne vont s'effondrer/se briser le long de cette ligne vers l'intérieur du projecteur P.

A noter que la pliure de la glace selon les axes Xa ou Xb sera favorisée si , de part et d'autre de ces axes virtuels, se trouvent des zones de la glace présentant des raideurs différentes (obtenues par des épaisseurs légèrement différentes par exemple).

Les figures 3a,3b illustrent de façon plus détaillée deux variantes dans la forme de la section de ces lignes L1a,b et c : Les figures représentent la zone de la face avant de la glace où la ligne d'amorce à la rupture creuse la surface interne Sint de la glace. La figure 3a représente une section de ligne évasée, en forme approximativement d'un V. C'est la forme qui se prête le mieux à céder sous un effort mécanique, et la forme préférée donc. La figure 3b représente une autre variante où la section de la ligne d'amorce à la rupture est en forme de U, de créneau.

Toutes autres formes géométriques de section, notamment toute autre forme intermédiaire entre celles des figures 3a et 3b sont possibles. Ces lignes sont faites lors de la fabrication même de la glace, par un procédé d'injection connu (la glace est, par exemple, en polycarbonate). Pour donner un ordre de grandeur de la dimension de ces lignes, l'épaisseur nominale de la glace en est ici d'environ 2,3 mm. L'épaisseur résiduelle er de la glace au niveau de la ligne d'amorce de rupture est de 1,8 mm, la profondeur de la ligne d'amorce est donc d'environ 0,5 mm. Et la largeur I de la ligne L1, mesurée à la surface de la surface interne Sint de la glace, est d'environ 2,3 mm.

Il existe d'autres variantes pour réaliser ces lignes d'amorce de rupture : ainsi, elle peut « creuser » non pas la surface interne Sint de la face avant de la glace, mais sa surface externe Sext. Elle peut « creuser » aussi les deux surfaces Sint et Sext en même temps pour faire un rétrécissement sous forme d'un « pincement » localisé de la glace.

Les figures 4a et 4b représentent une variante de configuration de ces lignes d'amorce de rupture L1 : dans le but de cacher des lignes, ou tout au moins de les rendre moins visibles, on peut les disposer à proximité immédiates de stries de décoration ou à fonction optique S, nettement moins profondes que des lignes d'amorce de rupture au sens de l'invention (au moins 2 à 3 fois moins profondes). Si, comme représenté à la figure 4a, ces stries S adoptent la même forme de section en V (en plus petit) que la ligne d'amorce à la rupture L1, on obtient un « camouflage » amélioré de la ligne L1.

L'invention prévoit aussi des mesures complémentaires optionnelles pour que le projecteur absorbe une partie plus importante de l'énergie dégagée lors d'un choc entre piéton et projecteur, comme illustré aux figures suivantes :

Les figures 5 à 7 représentent les détails du module optique MO de type elliptique, et la façon dont il est intégré dans le projecteur P.
Le module optique comprend un réflecteur R, généralement réalisé dans un matériau métallique, une lentille LE, généralement réalisée en verre, et un support intermédiaire I, généralement réalisé en métal ou en matériau plastique très rigide. Ce support intermédiaire I, appelé plus simplement intermédiaire, assure une liaison mécanique entre le réflecteur R et la lentille LE. On comprend que la lentille et l'intermédiaire sont des éléments rigides constituant des points durs sur le plan mécanique en cas de choc.

Le module optique MO est monté sur une platine de montage PT dans le projecteur, par des éléments A, B, D dont les fonctions sont de supporter le module elliptique, en lui permettant en outre de tourner autour d'une axe vertical, afin de pouvoir mettre en oeuvre une fonction code virage (« bending light » en anglais).
L'élément C est le moteur contrôlant la rotation du module. L'élément B est le support du module, l'élément A est la platine secondaire sur laquelle l'élément B est fixé par vissage, l'élément D est un composant associé à la platine secondaire A.

Les figures 5a et 5b illustrent la modification apportée par l'invention à la platine de montage PT : on a ajouté quatre lignes d'amorce de rupture L2. Ces quatre lignes sont réparties sur le pourtour de la platine entourant le module optique. Elles peuvent se présenter sous deux formes alternatives ou cumulatives : Elles peuvent être constituées de rétrécissements locaux de l'épaisseur de la platine, de façon similaire aux lignes L1a,b,c décrites plus haut. Elles peuvent aussi correspondre à des lignes de faiblesse créées volontairement dans les zones dites « de soudure » du moule quand la platine est en matériau plastique et fabriquée par moulage par injection, en suivant notamment l'enseignement du brevet français FR05 10 572 déposé par Valeo Vision le 17 octobre 2005. En cas de choc, ce sont ces lignes L2 de la platine qui vont céder, permettant le contrôle des zones de rupture et de la cinématique du module optique. On peut prévoir aussi moins de lignes L2, n'en avoir que deux par exemple pour provoquer un basculement plus qu'une translation du module optique. La platine PT est de préférence choisie en matériau polymère de type thermodurcissable, polymère relativement cassant, ce qui va favoriser la rupture de la platine au niveau des lignes L2.

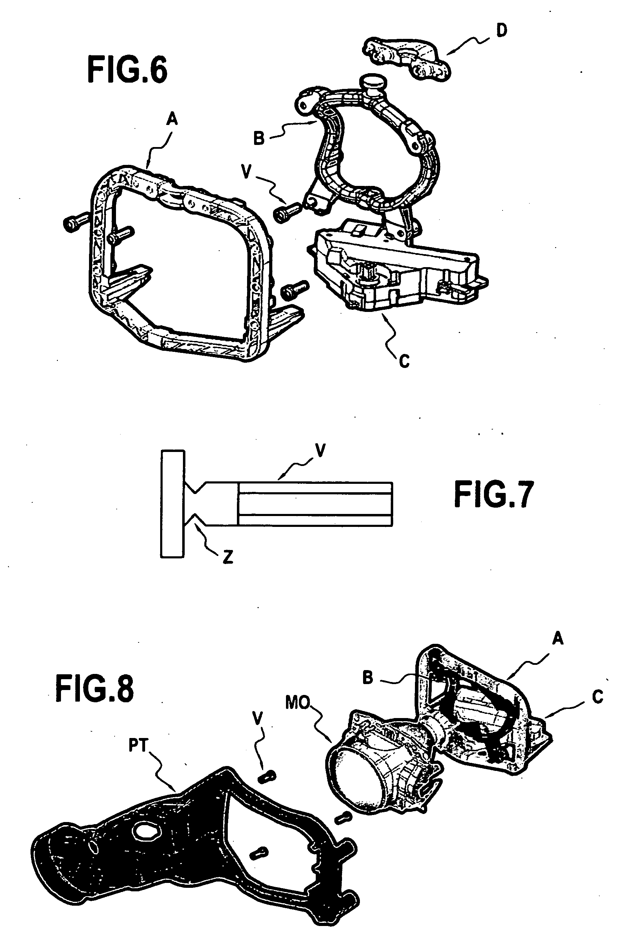

La figure 8 représente un type de vis V que l'invention propose aussi d'utiliser en option : il s'agit d'une vis en plastique. Entre la tête de la vis et la partie filetée de la vis, une zone Z présente un rétrécissement. Ce type de vis présente ainsi une tête frangible, qui se casse aisément sous l'effet d'une contrainte mécanique. L'invention en fait deux usages, alternativement ou cumulativement :
La figure 6 montre ainsi 4 vis V qui assurent la fixation entre A,B,C et D . La rupture des vis permet le démontage immédiat du module, et la réduction immédiate de la raideur de l'ensemble du bloc optique. Cela permet de maintenir les niveaux d'efforts vus par l'impacteur au dessous des limites prédéterminées. La rupture permet aussi le contrôle de la raideur du bloc optique et de sa cinématique, ainsi que l'absorption d'une partie de l'énergie de l'impact.
La figure 7 montre également 3 vis V assurant le montage du module et de son bâti sur la platine PT : en cas de choc, les vis cèdent et le module optique peut reculer. A noter que la figure 7 propose une solution alternative ou cumulative à la solution illustrée à la figure 5, les deux configurations ayant pour but de maintenir les niveaux d'efforts vues par l'impacteur au dessous des limites prédéterminées, de contrôler la raideur du bloc optique, de contrôler sa cinématique et d'absorber une partie de l'énergie de l'impact. A noter aussi, aussi bien dans le cas de la figure 6 que dans le cas de la figure 7, que l'on peut aussi choisir d'utiliser à la fois des vis V à rétrécissement selon la figure 8 et des vis standard, sans rétrécissement et/ou métallique. Le choix du nombre, de la nature et de la répartition des vis permet de contrôler la façon dont le module va bouger, sa cinématique, en cas de choc.

L'invention s'applique à tout type de projecteur, qu'il comprenne ou non des modules elliptiques.

## Revendications

1. Projecteur (P) pour véhicule automobile, comportant :
- un boîtier,
- une glace de fermeture (G) fermant le boîtier et présentant une face avant (FA) et une jupe périphérique (J),
- au moins un module optique (MO) comportant au moins un élément optique du type réflecteur (R) et/ou lentille (L), et au moins une source lumineuse (S),
dans lequel la face avant (FA) de la glace (G) est munie d'au moins une ligne d'amorce de rupture (L1).
**caractérisé en ce que** la ligne d'amorce de rupture (L1) est une ligne ouverte en forme d'un coin, suivant de préférence au moins localement le contour de la face avant (FA) de la glace (G), et d'échancrure conçue de telle sorte que la portion de glace au voisinage de cette ligne va se casser en se pliant, notamment approximativement selon un axe virtuel de pliage passant par les deux extrémités de la ligne ouverte ou à proximité de celles-ci.

2. Projecteur (P) selon la revendication précédente, **caractérisé en ce que** la ligne d'amorce de rupture (L1) est un amincissement local de la glace, de préférence sous forme d'une strie au niveau de la surface interne (SI) de la face avant (FA) de la glace (G).

3. Projecteur (P) selon l'une des revendications précédentes, **caractérisé en ce que** la ligne d'amorce de rupture (L1) est adjacente à une ou plusieurs stries (S) décoratives ou à fonction optique.

4. Projecteur (P) selon la revendication précédente, **caractérisé en ce que** la ou les plusieurs stries (S) décoratives ou à fonction optique adjacentes à la ligne d'amorce de rupture (L1) se présentent sous forme de sillons, lesdits sillons étant moins profonds que la ligne (L1), notamment au moins deux fois moins profonds, ou sous forme de lignes de bossage.

5. Projecteur (P) selon l'une des revendications précédentes, **caractérisé en ce que** l'assemblage des composants du module optique (MO) utilise des moyens de fixation frangibles (V).

6. Projecteur (P) selon l'une des revendications précédentes, **caractérisé en ce que** le module optique (MO) est monté sur une platine (PT) à l'aide de moyens de fixation frangibles (V).

7. Projecteur (P) selon l'une des revendications 5 ou 6, **caractérisé en ce que** les moyens de fixation frangibles sont des vis (V), de préférence en matériau plastique, présentant une zone d'amorce à la rupture.

8. Projecteur (P) selon l'une des revendications précédentes, **caractérisé en ce que** le module optique (MO) est monté sur une platine (PT) munie d'au moins une ligne d'amorce de rupture (L2), notamment au moins deux, de préférence quatre lignes d'amorce de rupture (L2).

9. Projecteur (P) selon l'une des revendications précédentes, **caractérisé en ce qu'**il comporte des moyens de fixation au véhicule sous forme de pattes de liaison frangibles (PL).

10. Procédé pour absorber au moins partiellement l'énergie générée lors d'un impact entre un obstacle et un projecteur de véhicule, selon l'une des revendications 1 à 9, ledit projecteur comportant :
- un boîtier,
- une glace de fermeture (G) fermant le boîtier (B) et présentant une face avant (FA) et une jupe périphérique (J),
- au moins un module optique (MO) comportant au moins un élément optique du type réflecteur (R) et/ou lentille (L), et au moins une source lumineuse (S),
**caractérisé en ce qu'**il comporte les étapes suivantes :
- absorption d'une partie de l'énergie par bris de la glace de fermeture (G) le long d'une ligne de rupture (L1) présente sur sa face avant (FA), puis
- absorption d'une partie de l'énergie par bris des moyens d'assemblage frangibles (V) des composants du module (MO),
- et/ou absorption d'une partie de l'énergie par bris des moyens d'assemblage frangibles (V) du module optique (MO) à sa platine,
- et/ou absorption d'une partie de l'énergie par bris des moyens de fixation frangibles (PL) du projecteur (P) au véhicule.

## Patentansprüche

1. Kraftfahrzeugscheinwerfer (P) mit:
- einem Gehäuse,
- einer Abschlussscheibe (G), die das Gehäuse verschließt und eine Vorderseite (FA) und einen umlaufenden Rand (J) aufweist,
- wenigstens einem Optikmodul (MO), das wenigstens ein optisches Element vom Typ Reflektor (R) und/oder Linse (L) und wenigstens eine Lichtquelle (S) aufweist,
wobei die Vorderseite (FA) der Scheibe (G) mit wenigstens einer Anrisslinie (L1) versehen ist,
**dadurch gekennzeichnet, dass** die Anrisslinie (L1) eine offene, keilförmige Linie ist, die vorzugsweise wenigstens stellenweise der Kontur der Vorderseite (FA) der Scheibe (G) folgt und deren Einschnitt solchermaßen ausgebildet ist, dass das Scheibenstück in der Nähe dieser Linie umknickend bricht, insbesondere ungefähr entlang einer virtuellen Biegeachse, die durch die beiden Enden der offenen Linie oder in deren Nähe verläuft.

2. Scheinwerfer (P) nach dem vorhergehenden Anspruch,
**dadurch gekennzeichnet, dass** die Anrisslinie (L1) eine lokale Verjüngung der Scheibe ist, vorzugsweise in Form einer Rille an der Innenfläche (SI) der Vorderseite (FA) der Scheibe (G).

3. Scheinwerfer (P) nach einem der vorhergehenden Ansprüche,
**dadurch gekennzeichnet, dass** die Anrisslinie (L1) einer oder mehrerer Rillen (S) mit Zierfunktion oder optischer Funktion benachbart ist.

4. Scheinwerfer (P) nach dem vorhergehenden Anspruch,
**dadurch gekennzeichnet, dass** die eine oder die mehreren Rillen (S) mit Zierfunktion oder optischer Funktion, die der Anrisslinie (L1) benachbart ist bzw. sind, die Form einer Riffelung hat, wobei die Tiefe der Riffelung geringer ist als die der Linie (L1), insbesondere um wenigstens das Zweifache geringer, oder die Form von Buckellinien.

5. Scheinwerfer (P) nach einem der vorhergehenden Ansprüche,
**dadurch gekennzeichnet, dass** bei der Montage der Bauteile des Optikmoduls (MO) zerbrechliche Befestigungsmittel (V) verwendet werden.

6. Scheinwerfer (P) nach einem der vorhergehenden Ansprüche,
**dadurch gekennzeichnet, dass** das Optikmodul (MO) auf einer Platte (PT) mit Hilfe von zerbrechlichen Befestigungsmitteln (V) angebracht ist.

7. Scheinwerfer (P) nach einem der Ansprüche 5 oder 6,
**dadurch gekennzeichnet, dass** die zerbrechlichen Befestigungsmittel Schrauben (V) sind, vorzugsweise aus Kunststoff, die einen Anrissbereich aufweisen.

8. Scheinwerfer (P) nach einem der vorhergehenden Ansprüche,
**dadurch gekennzeichnet, dass** das Optikmodul (MO) auf einer Platte (PT) angebracht ist, die wenigstens mit einer Anrisslinie (L2), insbesondere wenigstens mit zwei, vorzugsweise mit vier Anrisslinien (L2) versehen ist.

9. Scheinwerfer (P) nach einem der vorhergehenden Ansprüche,
**dadurch gekennzeichnet, dass** er Mittel zur Befestigung am Fahrzeug in Form von zerbrechlichen Vebindungslaschen (PL) aufweist.

10. Verfahren zur Absorption wenigstens eines Teils der Energie, die bei einem Aufprall zwischen einem Hindernis und einem Fahrzeugscheinwerfer nach einem der Ansprüche 1 bis 9 erzeugt wird, wobei der Scheinwerfer umfasst:
- ein Gehäuse,
- eine Abschlussscheibe (G), die das Gehäuse (B) verschließt und eine Vorderseite (FA) und einen umlaufenden Rand (J) aufweist,
- wenigstens ein Optikmodul (MO), das wenigstens ein optisches Element vom Typ Reflektor (R) und/oder Linse (L) und wenigstens eine Lichtquelle (S) aufweist, **dadurch gekennzeichnet, dass** es die folgenden Schritte umfasst:
- Absorption eines Teils der Energie durch Bruch der Abschlussscheibe (G) entlang einer auf der Vorderseite (FA) vorhandenen Bruchlinie (L1), dann
- Absorption eines Teils der Energie durch Bruch der zerbrechlichen Montagemittel (V) der Bauteile des Moduls (MO),
- und/oder Absorption eines Teils der Energie durch Bruch der zerbrechlichen Montagemittel (V) des Optikmoduls (MO) an der Platte,
- und/oder Absorption eines Teils der Energie durch Bruch der zerbrechlichen Befestigungsmittel (PL) des Scheinwerfers (P) am Fahrzeug.

## Claims

1. Headlight (P) for a motor vehicle, comprising:
- a housing;
- closure glass (G) which closes the housing, and has a front surface (FA) and a peripheral skirt (J);
- at least one optical module (MO) comprising at least one optical element of the reflector (R) and/or lens (L) type, and at least one source of light (S),
wherein the front surface (FA) of the glass (G) is provided with at least one rupture start line (L1),
**characterised in that** the rupture start line (L1) is an open line in the form of a corner, which preferably follows at least locally the contour of the front surface (FA) of the glass (G), with a cut-out designed such that the portion of glass in the vicinity of this line will break by bending, in particular approximately according to a virtual axis of bending which passes via the two ends of the open line, or in the vicinity of these ends.

2. Headlight (P) according to the preceding claim, **characterised in that** the rupture start line (L1) is a local thinning of the glass, preferably in the form of a rib at the level of the inner surface (S1) of the front surface (FA) of the glass (G).

3. Headlight (P) according to one of the preceding claims, **characterised in that** the rupture start line (L1) is adjacent to one or a plurality ofrib(s) (S) which is/are decorative or have an optical function.

4. Headlight (P) according to the preceding claim, **characterised in that** the one or a plurality ofrib(s) (S) which is/are decorative or have an optical function, and are adjacent to the rupture start line (L1), are in the form of furrows, the said furrows being less deep than the line (L1), and in particular at least two times less deep, or they are in the form of boss lines.

5. Headlight (P) according to one of the preceding claims, **characterised in that** the assembly of the components of the optical module (MO) uses breakable securing means (V).

6. Headlight (P) according to one of the preceding claims, **characterised in that** the optical module (MO) is fitted on a plate (PT) by means of breakable securing means (V).

7. Headlight (P) according to one of claims 5 or 6, **characterised in that** the breakable securing means are screws (V), preferably made of plastic material, with a rupture start area.

8. Headlight (P) according to one of the preceding claims, **characterised in that** the optical module (MO) is fitted on a plate (PT) which is provided with at least one rupture start line (L2), and in particular at least two, and preferably four rupture start lines (L2).

9. Headlight (P) according to one of the preceding claims, **characterised in that** it comprises means for securing to the vehicle in the form of breakable connection lugs (PL).

10. Process for absorption at least partially of the energy generated during an impact between an obstacle and a motor vehicle, according to one of claims 1 to 9, the said headlight comprising:
- a housing;
- closure glass (G) which closes the housing (B), and has a front surface (FA) and a peripheral skirt (J);
- at least one optical module (MO) comprising at least one optical element of the reflector (R) and/or lens (L) type, and at least one source of light (S),
**characterised in that** it comprises the following steps:
- absorption of part of the energy by breakage of the closure glass (G) along a rupture line (L1) which is present on its front surface (FA); then
- absorption of part of the energy by breakage of the breakable assembly means (V) of the components of the module (MO); and/or
- absorption of part of the energy by breakage of the breakable assembly means (V) of the optical module (MO) on its plate; and/or
- absorption of part of the energy by breakage of the breakable securing means (PL) of the headlight (P) on the vehicle.
